# EUROPEAN PATENT SPECIFICATION

(11) **EP 4 426 926 B1**
(45) Date of publication and mention of the grant of the patent: **10.12.2025**
(21) Application number: 22813233.8
(22) Date of filing: 03.11.2022
(51) Int. Cl.: F02M 65/00

(54) **A METHOD FOR TESTING A FUEL INJECTOR FOR AN INTERNAL COMBUSTION ENGINE**
VERFAHREN ZUM TESTEN EINES KRAFTSTOFFEINSPRITZVENTILS FÜR EINEN VERBRENNUNGSMOTOR
PROCÉDÉ DE TEST D'UN INJECTEUR DE CARBURANT POUR UN MOTEUR À COMBUSTION INTERNE

(30) Priority: 05.11.2021 SE 2151362
(43) Date of publication of application: 11.09.2024
(73) Proprietor: VOLVO TRUCK CORPORATION, 405 08 Göteborg (SE)
(72) Inventor: YUDANOV, Sergi, 426 69 VÄSTRA FRÖLUNDA (SE)
(74) Representative: Kransell & Wennborg KB
(86) International application number: PCT/EP2022/080680
(87) International publication number: WO 2023/079002

(56) References cited:
- CN-A- 105 020 076
- JP-A- 2014 020 317
- US-A- 4 798 084
- US-A1- 2013 025 354

## Description

### TECHNICAL FIELD

The disclosure relates generally to methods and systems for testing fuel injectors. In particular, the disclosure relates to a method of improved testing of a fuel injector before it is mounted in an internal combustion engine. In particular, the disclosure relates to a method of improved testing of a dual fuel injector before it is mounted in an internal combustion engine. The disclosure can be applied in heavy-duty vehicles, such as trucks, buses, and construction equipment. Although the disclosure may be described with respect to a particular vehicle, the disclosure is not restricted to any particular vehicle. The internal combustion engine can be used in a variety of applications, such as for example different land vehicles, marine vessels and stationary power stations. The disclosure also relates to control systems for performing a test of a fuel injector.

### BACKGROUND

In the field of testing injectors for injecting fuel into one or more cylinders of an internal combustion engine, such as fuel injectors for injecting diesel fuel into an engine of a heavy-duty vehicle, there is currently a focus on achieving an acceptable quality of the bench testing of the fuel injector. One example of a bench test of an injector is a bench test of a dual-fuel injector only in a few operating points performed by controlling a control pulse to regulate the opening of an injection needle of the dual fuel injector. The fuels used in such example may be methane and diesel.

However, one challenge with current testing of dual-fuel injectors is to reflect the operation of the injector in the internal combustion engine in a reasonable manner. The challenge can be met by applying a more accurate method when performing the bench test of the dual-fuel injector. According to its Abstract, US 4 798 084 A discloses an example of a measuring device for measuring a fuel injection quantity. Document CN105020076B discloses a method for testing a diesel type injector.

There is thus a desire to further improve the tests of injectors of an internal combustion engine for a vehicle, such as fuel injectors of a heavy-duty vehicle.

### SUMMARY

According to a first aspect of the disclosure, there is provided a method for testing a fuel injector for an internal combustion engine. The method comprises providing a fuel injector having a nozzle outlet; determining a control pulse duration range corresponding to a range of a quantity of injected fuel; determining a number of fixed durations of the control pulse within the duration range; selecting a plurality of operating points of the internal combustion engine, the plurality of operating points being defined by the number of fixed durations of the control pulse; based on the determined control pulse duration range, the injected fuel quantities, and the selected operating conditions, controlling a backpressure level at the nozzle outlet of the fuel injector so as to set backpressure levels expected to occur in the internal combustion engine during its operation in use within the determined control pulse duration range, the injected fuel quantities and the selected set of operating conditions; and obtaining a gain curve of the fuel injector representing the injected fuel quantity as a function of the duration of the control pulse, wherein a derivative of the gain curve is indicative of a quality of the fuel injector.

The first aspect of the disclosure may seek to improve test quality of a fuel injector by bringing the test closer to the boundary conditions that the injector can be exposed to in an internal combustion engine. In particular, by the proposed method, the backpressure at the injector's nozzle outlet can be set according to the levels expected to occur in the engine at the selected control pulse duration and, ideally, during the fuel injection.

By carefully selecting and controlling the nozzle backpressure in a few fixed test points, it becomes possible to achieve an acceptable accuracy of representation of the injector performance in the bench testing.

The proposed method may thus provide an improved test in view of hitherto known prior art test methods, where gain curves are generally generated by applying a constant backpressure. Such prior art test methods may often result in a failure to capture certain aspects of the injector quality that may be important for its performance in an internal combustion engine.

Moreover, at least in some prior art test methods, there is a challenge to replicate perceived drivability problems that the customers experience in the vehicles, especially during transient operation of engine. Often, the tested injectors perform as they should, judged by the ordinary injector tests in the bench and by the gain curve testing. The proposed method allows for replicating the problem (e.g. the transient problem) in a research lab environment in order to study the problem and also to provide a more accurate testing procedure of injectors.

By further increasing the chances of replicating the drivability problems in a more accurate manner, it may also become possible to reduce warranty costs.

In other words, while it may be common practice to adjust the backpressure of an injector for a more accurate determination of the fueling quantity and other parameters of a single injection, and/or set a selected fixed backpressure for a series of tests at a variety of fueling quantities, the proposed method provides for simulating a varying backpressure behavior in an engine when obtaining the injector gain curve.

To this end, the proposed method may allow for designing/manufacturing a better injector with enhanced controllability, improving quality of the test and subsequently the injector, and reducing the warranty costs.

Moreover, by the proposed method, it becomes possible to apply engine cylinder-representative backpressure (corresponding to about 30 to 250 bar) to the nozzle in the bench test at each of the control pulse durations when acquiring gain curve information for the injector.

In some examples, the values of the derivative of the gain curve across a given part of the control pulse duration range may be a measure of the quality of the fuel injector. A technical benefit of providing variable backpressure across that part according to the proposed method may include an improved calibration of the injector control model, improved understanding of the influence of various elements of injector design on its controllability, etc.

Furthermore, the stability of the derivative across a given part of the control pulse duration range is a measure of the quality of the fuel injector. Hereby, the calibration of the injector control model may further be improved.

In some examples, the number of fixed durations of the control pulse within the determined range may be greater than eight. In other words, the number of fixed durations of the control pulse within the determined range, at which the fuel injector is tested and the quantities of injected fuel are measured, may be greater than eight. A technical benefit may include a further improved understanding of injector behavior in the selected control range.

In some examples, an interval between adjacent fixed durations of the control pulse within the duration range may not be equal to another interval. In other words, an interval between adjacent fixed durations of the control pulse within the duration range, that is a difference between the adjacent fixed durations of the control pulse within the duration range, may not be equal to another interval. A technical benefit may include better characterization of controllability in specific regions of operating conditions that are more difficult in that respect.

In some examples, a maximum interval between the adjacent fixed durations of the control pulse in a gain curve may be 100 µs. A technical benefit may include a further improved resolution of the gain curve where necessary.

In some examples, the backpressure level may be controlled in response to a selected frequency of fuel injection events that may be used during the test. Hence, the method may further comprise controlling the backpressure level is controlled in response to a selected frequency of fuel injection events that is used during the test. A technical benefit may include a more precise simulation of the real operating conditions when bench-testing the injector, thus a better quality and efficiency of the injector development.

In some examples, the backpressure level may further be controlled in response to a selected fuel injection pressure used at any number of fixed durations of the control pulse duration range. Hence, the method may further comprise controlling the backpressure level in response to a selected fuel injection pressure used at any number of the fixed durations of the control pulse duration range. A technical benefit may include a more precise simulation of the real operating conditions when bench-testing the injector, thus a better quality and efficiency of the injector development.

In some examples, one or more parameters such as frequency or fuel injection pressure may be controlled along the gain curve in a predetermined pattern, for instance in order to simulate conditions occurring in an engine. Hence, the method may further comprise controlling any one of a frequency and fuel injection pressure along the gain curve in a predetermined pattern so as to simulate conditions occurring in an internal combustion engine. A technical benefit may include a better simulation of the injector operating conditions during engine transients.

In one example, the fuel injector may be a dual fuel injector comprising a first fuel inlet and a second fuel inlet. The proposed method may be particularly suitable for testing a fuel injector in the form of a dual fuel injector, because dual-fuel injectors are generally more sensitive to engine cylinder backpressure than an ordinary injector, such as an injector for diesel fuel. By way of example, a dual fuel injector may generally have a bigger area of a moveable needle exposed to the backpressure. A bigger area creates a proportionally bigger force on exposure to pressure. In addition, the hydraulic pressure inside a dual fuel injector that controls needle movements and opposes the force created by the backpressure, is generally much lower than the hydraulic pressure in an ordinary fuel injector. In this context, it should be noted that hydraulic pressure must be similar to the gas pressure.

In another example, the fuel injector may be a single-fuel injector comprising a single fuel inlet.

In some examples, the method may further comprise determining an appropriate level of the backpressure and applying the determined backpressure in an automatic fashion during a test of the fuel injector in response to a variation in any one of the control pulse duration, the frequency of the control pulse application, a fuel injection pressure, such as a common rail pressure. A technical benefit may include a better simulation of the operating conditions that occur in an engine, in use, thus a better understanding of the injector performance by means of the bench testing. In some examples,

The backpressure can be varied depending also on the frequency of injection events that is used during the gain curve test. Usually, gain curves are determined at a particular fixed frequency and a particular fixed common rail pressure (which is the source fuel pressure that eventually forces the fuel out of the nozzle during injection).

Different actuation frequencies and common rail pressures would usually bring about a different engine response in the form of a different cylinder pressure development. By controlling the backpressure applied to the nozzle in bench testing according to a simulated set of engine operating conditions that vary along the gain curve being determined, a more representative behavior of the injector being tested may be achieved. In one embodiment, a computer program may be utilized to calculate appropriate backpressure and apply it automatically during a test following either the control pulse duration, its frequency or the common rail pressure variation.

A combination of the above parameters could also be selected and controlled automatically when selecting adjacent test points during the gain curve determination.

In some examples, the provision of determining a number of fixed durations of the control pulse within the duration range may be carried out based on the assessment of the derivative of a previously obtained gain curve. Put it differently, the determination of the control pulse duration intervals between the fixed durations may be carried out based on the assessment of the derivative of the gain curve already obtained.

According to a second aspect of the disclosure, there is provided a fuel injector test system for testing a fuel injector, the fuel injector test system comprising a control system configured to be operatively connected with the fuel injector, wherein the control system is further configured to perform the method according to any one of the first aspect and/or any one of the previous examples. In some examples, the fuel injector test system comprises the fuel injector, which is operatively connected to the control system.

According to a third aspect of the disclosure, there is provided a computer program product comprising program code for performing, when executed by a processing circuitry, the method of the first aspect and/or any one of the previous examples.

According to a fourth aspect of the disclosure, there is provided a non-transitory computer-readable storage medium comprising instructions, which when executed by a processing circuitry, cause the processor device to perform the method of the first aspect and/or any one of the previous examples.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

The above, as well as additional objects, features and advantages of the present disclosure, will be better understood through the following illustrative and non-limiting detailed description of exemplary embodiments of the present disclosure, wherein:
Fig. 1 schematically illustrates a fuel injector test system according to example embodiments of the disclosure;
Fig. 2 is a diagram illustrating a generated gain curve by a method according to an example embodiment of the disclosure; and
Fig. 3 is a flow-chart of method steps according to an example embodiment of the disclosure.

With reference to the appended drawings, below follows a more detailed description of embodiments of the disclosure cited as examples.

### DETAILED DESCRIPTION

Aspects set forth below represent the necessary information to enable those skilled in the art to practice the disclosure.

The present disclosure will be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. The skilled person will recognize that many changes and modifications may be made within the scope of the appended claims. Similar reference characters refer to similar elements throughout the description.

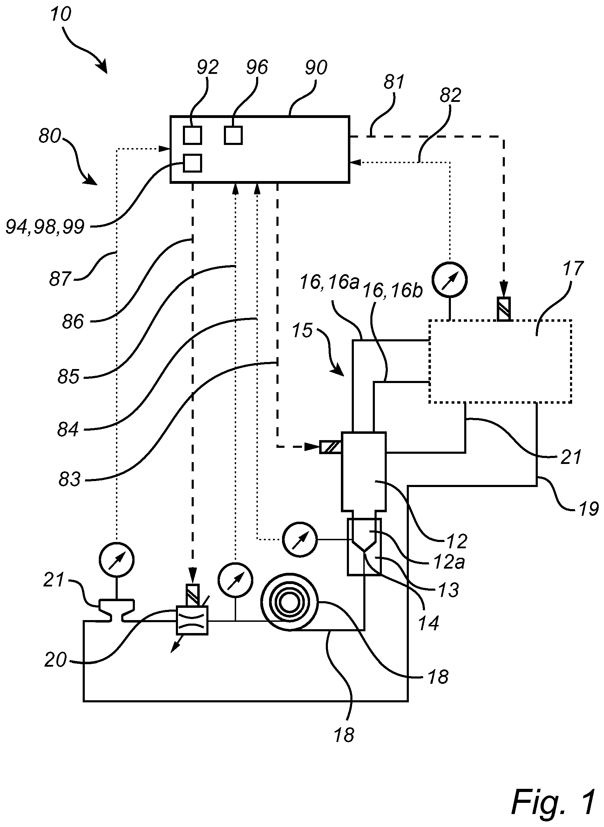

Fig. 1 illustrates an exemplary fuel injector test system 10 according to the present disclosure. As illustrated in Fig. 1, the fuel injector test system 10 is arranged and configured to test an installed fuel injector 12. The fuel injector test system may sometimes also be referred to as a test bench. The fuel injector 12 may generally be a fuel injector intended for an internal combustion engine, ICE, of a vehicle, such as a heavy-duty vehicle. The fuel injector 12 may be used in any type of ICE, such as diesel ICE, gasoline ICE and/or an ICE operable on a hydrogen-based fuel. Other application may include ICEs operable on LNG etc. The fuel injector 12 may generally be part of a vehicle common rail injector system. The fuel injector 12 is operatively connected to the parts of the fuel injector test system 10. Thus, during testing, the fuel injector 12 is an integral part of the fuel injector test system 10.

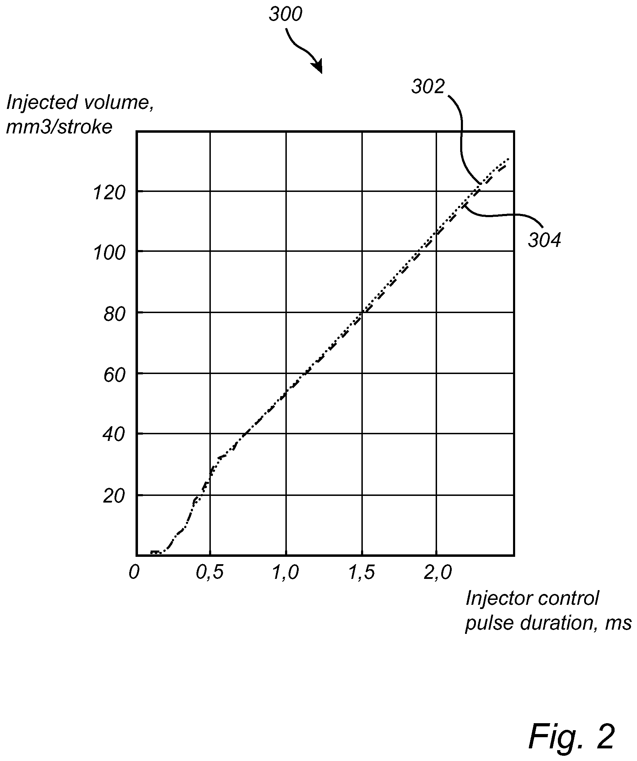

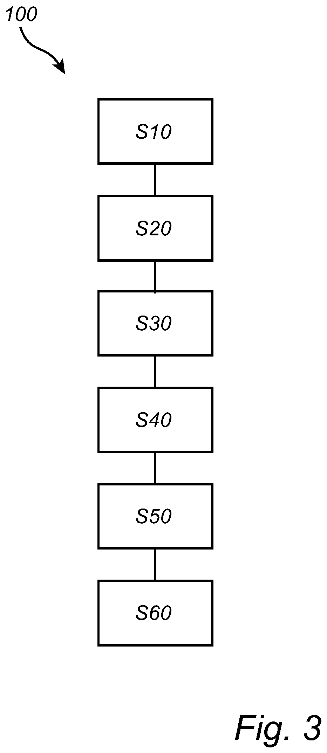

The fuel injector test system 10 is configured for testing a fuel injector using a specific test method according to examples described herein. In order to control the fuel injector test system 10 when performing the tests, the fuel injector test system 10 comprises an overall control system 90. The control system 90 comprises a processing circuitry 92 and a storage memory 94. The control system 90 of the fuel injector test system 10 is thus configured to perform the method of testing the fuel injector. As will be further described herein, the fuel injector test system 10 is configured to perform a method of testing the fuel injector 12 according to any one of the example embodiments of a method, as described in Figs. 2 and 3.

Moreover, the fuel injector test system 10 comprises a communication interface system 80. The communication interface system 80 is configured and arranged to establish a communication network between the components of the fuel injector test system 10, including the fuel injector 12, and the control system 90. The communication interface system 80 may communicate by a wire connection, wirelessly or by any other technology such as Bluetooth or the like.

In Fig. 1, the fuel injector 12 is a dual-fuel injector. However, the fuel injector may likewise be a single fuel injector. For ease of reference, the following description will refer to the fuel injector as the dual fuel injector.

The dual fuel injector 12 comprises corresponding inlet 16, 16a and 16b. In addition, the dual fuel injector has a nozzle 12a. The nozzle 12a is here a non-releasable part of the fuel injector 12. The nozzle 12a, and thus the dual fuel injector 12, comprises a nozzle outlet 14. Each one of the inlets 16a, 16b are configured to receive portions of fuel. In Fig. 1, the inlets 16a, 16b of the dual fuel injector 12 are fluidly connected to a fuel supply conduit 15. It should be noted that for a single fuel injector, the fuel injector may only have one inlet 16 for receiving fuel.

The outlet 14 is configured to supply fuel to a receptacle 13. The fuel receptacle 13 is generally an integral part of the test bench/system. The receptacle 13 is attached to the nozzle of the fuel injector 12. In Fig. 1, the receptacle 13 is fluidly connected to a test tube 18. The test tube 18 is here of a commonly known test tube used in bench tests.

In particular, as illustrated in Fig. 1, the dual fuel injector 12 comprises the first inlet 16a for a first fuel, e.g. a gaseous fuel, such as methane. In addition, the dual fuel injector 12 comprises the second inlet 16b for a second fuel, e.g. a diesel fuel. The first and second fuels are generally of different types of fuel. Hence, the dual fuel injector 12 is here configured to inject methane (first fuel) and diesel (second fuel).

In addition to the dual fuel injector 12 and its components, the fuel injector test system 10 comprises a fuel conditioning and pressure control system 17. The fuel conditioning and pressure control system 17 is fluidly connected to the fuel supply conduit 15. The fuel conditioning and pressure control system 17 is thus configured to supply the first and second fuels via the fuel supply conduit 15 and the inlets 16a, 16b to the fuel injector 12. The fuel conditioning and pressure control system 17 can be designed in several different manners, e.g. with two fuel outlets for the inlets 16a, 16b. The fuel conditioning and pressure control system 17 may also include one or more fuel tanks for the fuels.

The fuel conditioning and pressure control system 17 is here also configured to receive injected fuel from the outlet 14 of the fuel injector 12, as illustrated in Fig. 1. As such the fuel conditioning and pressure control system 17 is fluidly connected to the fuel supply conduit 15 and further fluidly connected to a fuel return conduit 19. The fuel return conduit 19 is fluidly connected to the test tube 18, as illustrated in Fig. 1.

The fuel conditioning and pressure control system 17 is also configured to regulate the pressure of the fuel supply to the dual fuel injector 12. The fuel conditioning and pressure control system 17 may thus be configured to direct the fuels around the various conduits of the system 10, such as to the conduit 15 to the inlets 16, 16a, 16b, and further to the test tube 18 and the fuel return conduit 19. The control of the flow of fuels within the system 10 can e.g. be performed by means of a pump (not illustrated).

The fuel conditioning and pressure control system 17 is also configured to communicate with the overall control system 90 via the communication interface system 80. In particular, the fuel conditioning and pressure control system 17 is configured to communicate with the overall control system 90 via a first and second communication channels 81, 82 of the communication interface system 80.

The fuel conditioning and pressure control system 17 may also be fluidly connected to the dual fuel injector 12 by an additional return fuel conduit 21. In this manner, fuel from the dual fuel injector may be returned to the fuel conditioning and pressure control system 17. This is merely an optional feature for certain systems 10.

Turning again to the dual fuel injector 12, the dual fuel injector 12 comprises a communication interface for communicating with the overall control system 90. In Fig. 1, the dual fuel injector 12 is configured to be in communication with the overall control system via a third and fourth communication channels 83, 84 of the communication interface system 80. By way of example, the communication channel 83 sends control signals from the overall control system 90 to the dual fuel injector 12. Further, the communication channel 84 transfers data signals from the nozzle 12a and its outlet 14. In this manner, the overall control system 90 is arranged and configured to acquire data from the dual fuel injector 12.

As illustrated in Fig. 1, a number of additional components are disposed in and around the test tube 18, allowing the control system 90 to measure and regulate the necessary parameters during the test. For instance, downstream the test tube 18 there is also a fifth communication channel 85 establishing a communication channel between the test tube 18 and the overall control system 90. The fifth communication channel 85 is part of the communication network 80. In this manner, injection rate signals can be transferred and acquired under various operating conditions. The operating conditions should here resemble various engine operating conditions, such as engine load and the like. The injection rate signals are typically further processed by the processing circuitry 92 of the control system 90. As such, the overall control system 90 is configured to acquire data with respect to the flow and pressure of the fuel(s) downstream the test tube 18.

Moreover, as illustrated in Fig. 1, there is arranged a control valve 20 downstream the outlet 14 of the fuel injector 12. The control valve 20 is also arranged downstream the test tube 18. The control valve 20 is by way of example a conventional flow regulating valve configured to control the flow of fuel in the test tube 18 and optionally to the fuel return conduit 19. The control valve 20 is also configured to communicate with the overall control system 90 via the communication interface system 80. In particular, the control valve 20 is configured to communicate with the overall control system 90 via a sixth communication channel 86 of the communication interface system 80. In this manner, the valve 20 is configured to set a relatively high pressure (the simulated backpressure) in the test tube 18, whereas pressure in the fuel return conduit 19 that is downstream the valve 20 may have no pressure at all. As such, the flow of fuel in the test tube 18 can be controlled by the control system 90, the balance of the in- and outflow setting up the average pressure in the test tube 18 which here represents the backpressure in the combustion cylinder of the simulated internal combustion engine.

Further, as illustrated in Fig. 1, there is arranged a flow meter 21 downstream the outlet 14 of the fuel injector 12. The flow meter 21 is also arranged downstream the control valve 20 in the test tube 18. The flow meter 21 is by way of example a conventional flow sensor. The flow meter 21 is configured to indicate the amount of fuel being transferred in the test tube 18 and the fuel return conduit 19. The flow meter 21 is also configured to communicate with the overall control system 90 via the communication interface system 80. In particular, the flow meter 21 is configured to communicate with the overall control system 90 via a seventh communication channel 87 of the communication interface system 80. In this manner, the control system 90 can acquire data on the amount of fuel being transferred in the test tube 18 and optionally in the fuel return conduit 19.

It should be readily appreciated that the fuel injector test system 10 also generally comprises the fuel supply conduit 15, test tube 18 and the fuel return conduit 19. The fuel return conduit 19 here extends from the flow meter 21 to the fuel conditioning and pressure control system 17.

In addition, the fuel injector test system 10 may generally comprise one or more electrical connectors so as to provide electrical connections between the components of the system 10.

The dual fuel injector 12 may be considered an integral part the fuel injector test system 10. Alternatively, the dual fuel injector 12 may be considered a separate part being fluidly and electronically connected to the fuel injector test system 10.

The fuel injector test system 10 is configured to the test the dual fuel injector 12 according to exemplary method, as will be further described in Figs. 2 and 3, in conjunction with the fuel injector test system 10 in Fig. 1. It will be readily appreciated that in the case of the dual-fuel injector where the two fuels are injected via different outlets of the nozzle 12a, the receptacle 13 is designed accordingly so as to receive either one or the other fuel for determining the injection characteristics of a particular fuel. Hence, the receptacle can be designed with one outlet. Alternatively, the receptacle can be designed with a number of outlets.

Turning now to Fig. 3, there is depicted a flowchart of a method according to an example embodiment of the disclosure. The method 100 is intended for testing the dual fuel injector 12, as described in relation to Fig. 1. The sequences of the method 100 are typically performed by the control system 90, as described herein.

As illustrated in Fig. 3, the method 100 comprises a step of providing S10 a fuel injector 12 having a nozzle 12a with an outlet 14. The fuel injector 12 is there a dual fuel injector. The fuel injector 12 is arranged in fuel injector the test system 10 as described and illustrated in Fig. 1.

Moreover, the method comprises a step of determining S20 a control pulse duration range corresponding to a range of a quantity of injected fuel. By way of example, the step S20 is based on pre-calibrated data that gives the knowledge of what durations are required approximately to inject the fuel within a given quantity range. This may generally be performed individually for each first and second fuel. The pre-calibrated data may be stored in the control system 90. The control pulse duration range corresponding to a range of a quantity of injected fuel is generally determined by the control system 90.

Further, the method comprises a step of determining S30 a number of fixed durations of the control pulse within the duration range. By way of example, the durations at which measurements will be performed may constitute the separate points from which a gain curve consists of. For instance, it may be suspected that the controllability of a given fuel injector could be problematic in a certain range, so smaller intervals between the adjacent points (the fixed durations) are then set for a better resolution of the gain curve. The number of fixed durations of the control pulse within the duration range is generally determined by the control system 90.

Subsequently, the method comprises a step of selecting S40 a plurality of operating points of the internal combustion engine. The plurality of operating points is defined by the number of fixed durations of the control pulse. Favourably, the plurality of operating points is defined by the number of fixed durations of the control pulse and the selected set of operating conditions.

It should be noted that the operating conditions here refers to various operating conditions of an internal combustion engine intended to be used, or has been used, in combination with the fuel injector. For example, if the test is intended to estimate injector performance at a high engine speed and a certain load, the method comprises choosing that high speed (frequency of injection) at the particular chosen load (fuel quantity) as the selected operating conditions, and then maybe the common rail pressure that would correspond to this operating condition in the engine. It should also be noted that to obtain one point of the gain curve (fig. 2), the bench test is run at that frequency for a time necessary to stabilize parameters and measure what is needed.

Based on the determined control pulse duration range, the injected fuel quantities, and the selected set of engine operating conditions, the method comprises a step of controlling S50 a backpressure level at the nozzle outlet 14 of the fuel injector 12 so as to set backpressure levels expected to occur in the internal combustion engine during its operation in use within the determined control pulse duration range, the injected fuel quantities and the selected set of engine conditions.

By way of example, the valve 20 is operated to set the backpressure, the control system 90 is configured to set the frequency of the injection and the injected quantity (e.g. by setting the duration of the control pulses), while the fuel conditioning and pressure control system 17 sets the fuel pressure for the injection. Other configurations and control operations may also be conceivable when performing the method, as further described herein.

Subsequently, the method comprises a step of obtaining S60 a gain curve of the fuel injector 12 representing the injected fuel quantities as a function of the duration of the control pulse. The gain curve is generated and obtained by means of the control system 90. The gain curve can be plotted on a screen (not illustrated), which is arranged in communication with the control system 90. Fig. 2 illustrates one example of a gain curve 300 obtained by the method in Fig. 3.

In the gain curve 300, a derivative of the gain curve 300 is indicative of a quality of the fuel injector 12, as will be further described hereinafter. In other words, the test method 100 provides for obtaining a gain curve 300 of the fuel injector 12.

Moreover, the gain curve 300 is here a reflection of the dependence of injected quantity of the fuel to the duration of the electrical pulse that controls the injection of fuel. It should be readily appreciated that Fig. 3 here illustrates a gain curve example of a diesel fuel injector taken at a constant common rail pressure, at a constant backpressure and with a constant injection frequency. Gain curves for dual fuel injectors may be different and may vary in view of type of fuel and type of injector.

As may be gleaned from Fig.2, the x-axis indicates the injector control pulse duration in microseconds, whilst the y-axis indicates the injected fuel volume in millimeter³/stroke. The stroke here refers to an individual injection by the fuel injector 12. As such, the gain curve 300 in Fig. 3 illustrates a relationship between the duration of the control pulse and the volume of injected fuel by the fuel injector 12 into a cylinder, here corresponding to the test tube 18. Put it differently, the obtained gained curve represents the injected fuel volumes as a function of the duration of the control pulse.

The fuel injector 12 can be tested a number of times. In this example, as illustrated in Fig. 2, two different injectors 12 were tested, which produced two different gain cures. The dotted line 302 illustrates one of the injectors 12, while the dashed line 304 illustrates another (a second) fuel injector 12.

The derivative of the illustrated gain curve 300 is indicative of the quality of the fuel injector 12. If the derivative is constant along the entire control pulse range (x-axis), then the injector response is considered linear, thus considered to be predictable, unlike when for instance the derivative changes all the time or equals zero at a certain pulse duration range. In this context, it may be appreciated that, in general, the more unstable the derivative, the more the injector is likely to drift in use, in other words deviate from the initial calibration (as can be seen for instance in Fig.2, i.e. the same injector behaved differently after certain use in an engine).

In particular, a change of the derivative across a given part of the control pulse duration range is a measure of the quality of the fuel injector.

In addition, the values of the derivative across a given part of the control pulse duration range is a measure of the quality of the fuel injector.

In addition, or alternatively, the stability of the derivative across a given part of the control pulse duration range is a measure of the quality of the fuel injector. Hence, the test method can be modified in several different manners.

The number of fixed durations of the control pulse within a certain gain curve may vary for different tests. In one example, the number of fixed durations of the control pulse within the determined range, at which the fuel injector is tested and the quantities of injected fuel are measured, is greater than eight. Accordingly, the method may further comprise setting the number of fixed durations of the control pulse within a certain gain curve. By way of example, the given number of fixed durations of the control pulse is greater than eight.

Favourably, an interval between adjacent fixed durations of the control pulse within the duration range, that is a difference between the adjacent fixed durations of the control pulse within the duration range, is not equal to another interval. Accordingly, the method may further comprise setting a time interval not equal to another interval.

Favourably, a maximum interval between the adjacent fixed durations of the control pulses in a gain curve is 100 µs.

The method may also comprise additional operational steps so as to further improve the testing. In some examples, the method comprises a step of controlling the backpressure level in response to a selected frequency of fuel injection events that is used during the test. The backpressure is generally controlled by the valve 20. The control target backpressure generally depends on the engine rpm and is derivable from engine test data. This step may be a sub-step of the step of controlling S50 the backpressure level at the nozzle outlet of 14 the fuel injector 12 so as to reflect backpressure levels expected to occur in the internal combustion engine during ordinary operation in a vehicle at the determined control pulse duration range.

In some examples, the method comprises a step of controlling the backpressure level in response to a selected fuel injection pressure used at any given control pulse duration. More specifically, the method comprises controlling the backpressure level in response to a selected fuel injection pressure used at any number of the fixed durations of the control pulse duration range.

As mentioned above, the fuel injection pressure chosen in a test would usually not influence the backpressure in an engine cylinder at the start of injection, but may influence the backpressure during the injection which would be important for the termination of injection. Hence, there may be an interest to control the backpressure in the bench testing in relation to the fuel injection pressure. This step may also be a sub-step of the step of controlling S50 the backpressure level at the nozzle outlet of 14 the fuel injector 12 so as to reflect backpressure levels expected to occur in the internal combustion engine during ordinary operation in a vehicle at the determined control pulse duration.

Favourable, the step of determining a number of fixed durations of the control pulse within the duration range is carried out based on the assessment of the derivative of the gain curve already obtained. For instance, the method performs the steps S10 to S60, and the uses the gain curve in an iteration of the method in step S30. As such, by way of example, in the iteration of the method, the provision of determining a number of fixed durations of the control pulse within the duration range is carried out based on the assessment of the derivative of a previously obtained gain curve.

Put it differently, the determination of the control pulse duration intervals between the fixed durations is carried out based on the assessment of the derivative of the gain curve already obtained. In this manner, it becomes possible to further improve the efficiency of testing. By way of example, one would first select the equal intervals as mentioned above, determine the gain curve, look at how stable its derivative is, notice in which region it looks suspicious, and then re-select the intervals increasing the resolution of the points in that specific region.

In some examples, the method comprises controlling one or more parameters such as the frequency or the fuel injection pressure along the gain curve in a predetermined pattern, for instance in order to further simulate conditions occurring in an engine. Thus, the method may comprise controlling any one of an fuel injection frequency and fuel injection pressure along the gain curve in a predetermined pattern so as to simulate conditions occurring in an internal combustion engine.

In some examples, the method further comprises the steps of determining an appropriate level of the backpressure; and applying the determined backpressure in an automatic fashion during a test of the fuel injector 12 in response to a variation in any one of the control pulse duration, a frequency of the control pulse application, a fuel injection pressure, such as a common rail pressure, and/or a combination thereof. It has been observed that using the above parameters together may provide an even more improved method of simulating the operating conditions, thus allowing a better understanding of injector operation in the engine that can be obtained by the bench testing. These steps may also be sub-steps of the step of controlling S50 the backpressure level at the nozzle outlet of 14 the fuel injector 12 so as to reflect backpressure levels expected to occur in the internal combustion engine during ordinary operation in a vehicle in the determined control pulse duration range.

As mentioned above, Fig. 1 also briefly illustrates a schematic diagram of the control system 90. The control system 90 is here a computer system for implementing examples disclosed herein. The computer system 90 is adapted to execute instructions from a computer-readable medium to perform these and/or any of the functions or processing described herein. The computer system 90 may be connected (e.g., networked) to other machines in a LAN, an intranet, an extranet, or the Internet. While only a single device is illustrated, the computer system 90 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer control system 90 may comprise at least one computing device or electronic device capable of including firmware, hardware, and/or executing software instructions to implement the functionality described herein. The computer control system 90 may include a processor device 92 (may also be referred to as a control unit), a memory 94, and a system bus 96. The computer system 90 may include at least one computing device having the processor device 92. The system bus 96 provides an interface for system components including, but not limited to, the memory 94 and the processor device 92. The processor device 92 may include any number of hardware components for conducting data or signal processing or for executing computer code stored in memory 94. The processor device 92 (e.g., processing circuitry) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 96 may be any of several types of bus structures that may further interconnect to a memory bus (with or without a memory controller), a peripheral bus, and/or a local bus using any of a variety of bus architectures. The memory 94 may be one or more devices for storing data and/or computer code for completing or facilitating methods described herein. The memory 94 may include database components, object code components, script components, or other types of information structure for supporting the various activities herein. Any distributed or local memory device may be utilized with the systems and methods of this description. The memory 94 may be communicably connected to the processor device 92 (e.g., via a circuit or any other wired, wireless, or network connection) and may include computer code for executing one or more processes described herein. The memory 94 may include non-volatile memory 98 (e.g., read-only memory (ROM), erasable programmable read-only memory (EPROM), electrically erasable programmable read-only memory (EEPROM), etc.), and volatile memory 99 (e.g., random-access memory (RAM)), or any other medium which can be used to carry or store desired program code in the form of machine-executable instructions or data structures and which can be accessed by a computer or other machine with a processor device 92. A basic input/output system (BIOS) 97 may be stored in the non-volatile memory 98 and can include the basic routines that help to transfer information between elements within the computer system 90.

The computer system 90 may further include or be coupled to a non-transitory computer-readable storage medium such as the storage device 94, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 94 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 94 and/or in the volatile memory 99, which may include an operating system and/or one or more program modules. All or a portion of the examples disclosed herein may be implemented as a computer program product stored on a transitory or non-transitory computer-usable or computer-readable storage medium (e.g., single medium or multiple media), such as the storage device 94, which includes complex programming instructions (e.g., complex computer-readable program code) to cause the processor device 92 to carry out the steps described herein. Thus, the computer-readable program code can comprise software instructions for implementing the functionality of the examples described herein when executed by the processor device 92. The processor device 92 may serve as a controller or control system for the computer system 90 that is to implement the functionality described herein.

The computer system 90 also may include an input device interface (e.g., input device interface and/or output device interface). The input device interface may be configured to receive input and selections to be communicated to the computer system 90 when executing instructions, such as from a keyboard, mouse, touch-sensitive surface, etc. Such input devices may be connected to the processor device 92 through the input device interface coupled to the system bus 96 but can be connected through other interfaces such as a parallel port, an Institute of Electrical and Electronic Engineers (IEEE) 1394 serial port, a Universal Serial Bus (USB) port, an IR interface, and the like. The computer system 90 may include an output device interface configured to forward output, such as to a display, a video display unit (e.g., a liquid crystal display (LCD) or a cathode ray tube (CRT)). The computer system 90 may also include a communications interface 80 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method (100) for testing a fuel injector (12) for an internal combustion engine, said method comprising:
- providing (S10) a fuel injector having a nozzle outlet (14);
- determining (S20) a control pulse duration range corresponding to a range of a quantity of injected fuel;
- determining (S30) a number of fixed durations of the control pulse within the duration range;
- selecting (S40) a plurality of operating points of said internal combustion engine, said plurality of operating points being defined by the number of fixed durations of the control pulse;
- based on the determined control pulse duration range, the injected fuel quantities, and the selected operating conditions, controlling (S50) a backpressure level at the nozzle outlet of the fuel injector so as to set backpressure levels expected to occur in the internal combustion engine during its operation in use within the determined control pulse duration range, the injected fuel quantities and the selected set of operating conditions; and
- obtaining (S60) a gain curve (300) of the fuel injector representing the injected fuel quantity as a function of the duration of the control pulse, wherein a derivative of the gain curve is indicative of a quality of the fuel injector, and wherein a stability of the derivative across a given part of the control pulse duration range is a measure of the quality of the fuel injector.

2. Method according to claim 1, wherein the values of the derivative across the given part of the control pulse duration range is a measure of the quality of the fuel injector.

3. Method according to any one of the preceding claims, wherein the number of fixed durations of the control pulse within the determined range is greater than eight.

4. Method according to any one of the preceding claims, wherein an interval between adjacent fixed durations of the control pulse within the duration range is not equal to another interval.

5. Method according to any one of claims 1 to 4, wherein a maximum interval between the adjacent fixed durations of the control pulse in a gain curve is 100 µs.

6. Method according to any one of the preceding claims, further comprising controlling the backpressure level in response to a selected frequency of fuel injection events that is used during the test.

7. Method according to any one of the preceding claims, further comprising controlling the backpressure level in response to a selected fuel injection pressure used at any number of the fixed durations of the control pulse duration range.

8. Method according to any one of the preceding claims, further comprising controlling any one of a frequency and fuel injection pressure along the gain curve in a predetermined pattern so as to simulate conditions occurring in an internal combustion engine.

9. Method according to any one of the preceding claims, wherein the fuel injector is a dual fuel injector comprising a first fuel inlet (16, 16a) and a second fuel inlet (16, 16b).

10. Method according to any one of the preceding claims 1 to 8, wherein the fuel injector is a single-fuel injector comprising a single fuel inlet (16).

11. Method according to any one of the preceding claims, further comprising:
- determining an appropriate level of the backpressure; and
- applying the determined backpressure in an automatic fashion during a test of the fuel injector in response to a variation in any one of the control pulse duration, a frequency of the control pulse application, a fuel injection pressure, such as common rail pressure.

12. Method according to any one of the preceding claims, wherein determining a number of fixed durations of the control pulse within the duration range is carried out based on the assessment of the derivative of a previously obtained gain curve.

13. A fuel injector test system (10) for testing a fuel injector (12), the fuel injector test system comprising a control system (90) configured to be operatively connected with the fuel injector, wherein the control system is further configured to perform the method according to any one of the preceding claims 1 to 12.

14. A computer program product comprising program code for performing, when executed by a processing circuitry, the method of any of claims 1 to 12.

15. A non-transitory computer-readable storage medium comprising instructions, which when executed by a processing circuitry, cause the processor device to perform the method of any of claims 1 to 14.

## Patentansprüche

1. Verfahren (100) zum Testen eines Kraftstoffeinspritzventils (12) für einen Verbrennungsmotor, das Verfahren umfassend:
- Bereitstellen (S10) eines Kraftstoffeinspritzventils mit einem Düsenauslass (14);
- Bestimmen (S20) eines Steuerimpulsdauerbereichs, der einem Bereich einer eingespritzten Kraftstoffmenge entspricht;
- Bestimmen (S30) einer Anzahl fester Dauerwerte des Steuerimpulses innerhalb des Dauerbereichs;
- Auswählen (S40) mehrerer Betriebspunkte des Verbrennungsmotors, wobei die Vielzahl von Betriebspunkten durch die Anzahl der festen Dauerwerte des Steuerimpulses definiert ist;
- basierend auf dem bestimmten Steuerimpulsdauerbereich, den eingespritzten Kraftstoffmengen und den ausgewählten Betriebsbedingungen, Steuern (S50) eines Gegendruckniveaus am Düsenauslass des Kraftstoffeinspritzventils, um Gegendruckniveaus einzustellen, von denen erwartet wird, dass sie in dem Verbrennungsmotor während seines Betriebs im Gebrauch innerhalb des bestimmten Steuerimpulsdauerbereichs, der eingespritzten Kraftstoffmengen und des ausgewählten Satzes von Betriebsbedingungen auftreten; und
- Erhalten (S60) einer Verstärkungskurve (300) des Kraftstoffeinspritzventils, die das eingespritzte Kraftstoffquantil als eine Funktion der Dauer des Steuerimpulses darstellt, wobei eine Ableitung der Verstärkungskurve eine Qualität des Kraftstoffeinspritzventils anzeigt, und wobei eine Stabilität der Ableitung über einen gegebenen Teil des Steuerimpulsdauerbereichs ein Maß für die Qualität des Kraftstoffeinspritzventils ist.

2. Verfahren nach Anspruch 1, wobei die Werte der Ableitung über den gegebenen Teil des Steuerimpulsdauerbereichs ein Maß für die Qualität des Kraftstoffeinspritzventils sind.

3. Verfahren nach einem der vorhergehenden Ansprüche, wobei die Anzahl der festen Dauerwerte des Steuerimpulses innerhalb des festgelegten Bereichs größer als acht ist.

4. Verfahren nach einem der vorhergehenden Ansprüche, wobei ein Intervall zwischen benachbarten festen Dauerwerten des Steuerimpulses innerhalb des Dauerbereichs nicht gleich einem anderen Intervall ist.

5. Verfahren nach einem der Ansprüche 1 bis 4, wobei ein maximales Intervall zwischen den benachbarten festen Dauerwerten des Steuerimpulses in einer Verstärkungskurve 100 µs beträgt.

6. Verfahren nach einem der vorhergehenden Ansprüche, das ferner die Steuerung des Gegendruckniveaus in Reaktion auf eine ausgewählte Frequenz von Kraftstoffeinspritzvorgängen umfasst, die während des Tests verwendet wird.

7. Verfahren nach einem der vorhergehenden Ansprüche, das ferner die Steuerung des Gegendruckniveaus in Reaktion auf einen ausgewählten Kraftstoffeinspritzdruck umfasst, der bei einer beliebigen Anzahl der festen Dauerwerte des Steuerimpulsdauerbereichs verwendet wird.

8. Verfahren nach einem der vorhergehenden Ansprüche, das ferner die Steuerung einer Frequenz und/oder eines Kraftstoffeinspritzdrucks entlang der Verstärkungskurve in einem vorbestimmten Muster umfasst, um Bedingungen zu simulieren, die in einem Verbrennungsmotor auftreten.

9. Verfahren nach einem der vorhergehenden Ansprüche, wobei das Kraftstoffeinspritzventil ein Doppelkraftstoffeinspritzventil mit einem ersten Kraftstoffeinlass (16, 16a) und einem zweiten Kraftstoffeinlass (16, 16b) ist.

10. Verfahren nach einem der vorhergehenden Ansprüche 1 bis 8, wobei das Kraftstoffeinspritzventil ein Einzelkraftstoffeinspritzventil mit einem einzigen Kraftstoffeinlass (16) ist.

11. Verfahren nach einem der vorhergehenden Ansprüche, ferner umfassend:
- Bestimmen einer geeigneten Höhe des Gegendrucks; und
- automatische Anwenden des bestimmten Gegendrucks während eines Tests des Kraftstoffeinspritzventils als Reaktion auf eine Änderung der Dauer des Steuerimpulses, der Frequenz der Steuerimpulsanwendung oder des Kraftstoffeinspritzdrucks, beispielsweise des Common-Rail-Drucks.

12. Verfahren nach einem der vorhergehenden Ansprüche, wobei das Bestimmen einer Anzahl fester Dauerwerte des Steuerimpulses innerhalb des Dauerbereichs auf der Grundlage der Auswertung der Ableitung einer zuvor erhaltenen Verstärkungskurve erfolgt.

13. Kraftstoffeinspritzventil-Testsystem (10) zum Testen eines Kraftstoffeinspritzventils (12), das Kraftstoffeinspritzventil-Testsystem umfassend ein Steuerungssystem (90), das konfiguriert ist, um betriebsmäßig mit dem Kraftstoffeinspritzventil verbunden zu sein, wobei das Steuersystem ferner konfiguriert ist, um das Verfahren nach einem der vorhergehenden Ansprüche 1 bis 12 durchzuführen.

14. Computerprogrammprodukt mit einem Programmcode zum Durchführen des Verfahrens nach einem der Ansprüche 1 bis 12, wenn es von einer Verarbeitungsschaltung ausgeführt wird.

15. Nicht-transitorisches computerlesbares Speichermedium, das Anweisungen umfasst, die, wenn sie von einer Verarbeitungsschaltung ausgeführt werden, die Verarbeitungsschaltung veranlassen, das Verfahren nach einem der Ansprüche 1 bis 14 durchzuführen.

## Revendications

1. Procédé (100) de test d'un injecteur de carburant (12) pour moteur à combustion interne, ledit procédé comprenant les étapes consistant à :
- prévoir (S10) un injecteur de carburant ayant une sortie de buse (14) ;
- déterminer (S20) une plage de durées d'impulsion de commande correspondant à une plage d'une quantité de carburant injectée ;
- déterminer (S30) un nombre fixe de durées de l'impulsion de commande dans la plage de durées ;
- sélectionner (S40) une pluralité de points de fonctionnement dudit moteur à combustion interne, ladite pluralité de points de fonctionnement étant définie par le nombre de durées fixes de l'impulsion de commande ;
- sur la base de la plage de durées d'impulsion de commande déterminée, des quantités de carburant injectées et des conditions de fonctionnement sélectionnées, commander (S50) un niveau de contre-pression à la sortie de buse de l'injecteur de carburant de manière à fixer les niveaux de contre-pression attendus dans le moteur à combustion interne au cours de son fonctionnement dans la plage de durées d'impulsion de commande déterminée, les quantités de carburant injectées et l'ensemble de conditions de fonctionnement sélectionné ; et
- obtenir (S60) une courbe de gain (300) de l'injecteur de carburant représentant la quantité de carburant injectée en fonction de la durée de l'impulsion de commande, une dérivée de la courbe de gain étant indicative d'une qualité de l'injecteur de carburant, et une stabilité de la dérivée sur une partie donnée de la plage de durées d'impulsion de commande étant une mesure de la qualité de l'injecteur de carburant.

2. Procédé selon la revendication 1, dans lequel les valeurs de la dérivée sur la partie donnée de la plage de durées d'impulsion de commande sont une mesure de la qualité de l'injecteur de carburant.

3. Procédé selon l'une quelconque des revendications précédentes, dans lequel le nombre de durées fixes de l'impulsion de commande dans la plage déterminée est supérieur à huit.

4. Procédé selon l'une quelconque des revendications précédentes, dans lequel un intervalle entre des durées fixes adjacentes de l'impulsion de commande dans la plage de durées n'est pas égal à un autre intervalle.

5. Procédé selon l'une quelconque des revendications 1 à 4, dans lequel un intervalle maximal entre les durées fixes adjacentes de l'impulsion de commande dans une courbe de gain est de 100 µs.

6. Procédé selon l'une quelconque des revendications précédentes, comprenant en outre la commande du niveau de contre-pression en réponse à une fréquence sélectionnée d'événements d'injection de carburant qui est utilisée pendant le test.

7. Procédé selon l'une quelconque des revendications précédentes, comprenant en outre la commande du niveau de contre-pression en réponse à une pression d'injection de carburant sélectionnée utilisée à un nombre quelconque des durées fixes de la plage de durées d'impulsions de commande.

8. Procédé selon l'une quelconque des revendications précédentes, comprenant en outre la commande de l'une quelconque d'une fréquence et d'une pression d'injection de carburant le long de la courbe de gain selon un modèle prédéterminé de manière à simuler des conditions se produisant dans un moteur à combustion interne.

9. Procédé selon l'une quelconque des revendications précédentes, dans lequel l'injecteur de carburant est un injecteur de carburant double comprenant une première entrée de carburant (16, 16a) et une seconde entrée de carburant (16, 16b).

10. Procédé selon l'une quelconque des revendications précédentes 1 à 8, dans lequel l'injecteur de carburant est un injecteur de carburant unique comprenant une entrée de carburant unique (16).

11. Procédé selon l'une quelconque des revendications précédentes, comprenant en outre les étapes consistant à :
- déterminer un niveau approprié de contre-pression ; et
- appliquer la contre-pression déterminée de façon automatique pendant un essai de l'injecteur de carburant en réponse à une variation de l'une quelconque parmi la durée de l'impulsion de commande, une fréquence d'application de l'impulsion de commande, une pression d'injection de carburant, telle qu'une pression de rampe commune.

12. Procédé selon l'une quelconque des revendications précédentes, dans lequel la détermination d'un nombre de durées fixes de l'impulsion de commande dans la plage de durées est effectuée sur la base de l'évaluation de la dérivée d'une courbe de gain obtenue précédemment.

13. Système de test d'injecteur de carburant (10) pour tester un injecteur de carburant (12), le système de test d'injecteur de carburant comprenant un système de commande (90) configuré pour être connecté fonctionnellement à l'injecteur de carburant, le système de commande étant en outre configuré pour exécuter le procédé selon l'une quelconque des revendications précédentes 1 à 12.

14. Produit de programme informatique comprenant un code de programme pour exécuter, lorsqu'il est exécuté par un circuit de traitement, le procédé selon l'une quelconque des revendications 1 à 12.

15. Support de stockage non transitoire lisible par ordinateur comprenant des instructions qui, lorsqu'elles sont exécutées par un circuit de traitement, amènent le dispositif processeur à exécuter le procédé selon l'une quelconque des revendications 1 à 14.
